# EUROPÄISCHE PATENTSCHRIFT

(11) **EP 4 103 341 B1**
(45) Veröffentlichungstag und Bekanntmachung des Hinweises auf die Patenterteilung: **26.07.2023**
(21) Anmeldenummer: 21727408.3
(22) Anmeldetag: 17.05.2021
(51) Int. Cl.: B21J 1/06, B21J 5/12, B21K 1/76, F16D 3/16

(54) **VERFAHREN ZUR HERSTELLUNG EINES GELENKWELLENBAUTEILS, VERFAHREN ZUR HERSTELLUNG EINER GELENKWELLE UND GELENKWELLEN-BAUTEIL HERGESTELLT MIT EINEM SOLCHEN VERFAHREN**
METHOD FOR PRODUCING A JOINTED SHAFT COMPONENT, METHOD FOR PRODUCING A JOINTED SHAFT, AND JOINTED SHAFT COMPONENT PRODUCED BY SUCH A METHOD
PROCÉDÉ DE FABRICATION D'UN ÉLÉMENT D'ARBRE DE TRANSMISSION, PROCÉDÉ DE FABRICATION D'UN ARBRE DE TRANSMISSION ET ÉLÉMENT D'ARBRE DE TRANSMISSION FABRIQUÉ SELON UN TEL PROCÉDÉ

(30) Priorität: 29.05.2020 DE 102020114495
(43) Veröffentlichungstag der Anmeldung: 21.12.2022
(73) Patentinhaber: Hirschvogel Umformtechnik GmbH, 86920 Denklingen (DE)
(72) Erfinder: LUBE, Stefan, 86956 Schongau (DE); WEINDL, Matthias, 86989 Steingaden (DE); BAUR, Ulrich, 87660 Irsee (DE)
(74) Vertreter: Müller Schupfner & Partner Patent- und Rechtsanwaltspartnerschaft mbB
(86) Internationale Anmeldenummer: PCT/EP2021/062952
(87) Internationale Veröffentlichungsnummer: WO 2021/239486

(56) Entgegenhaltungen:
- JP-A- 2009 185 930
- KR-A- 20090 100 011
- KR-A- 20140 066 029

## Beschreibung

Die vorliegende Erfindung betrifft ein Verfahren zur Herstellung eines Gelenkwellenbauteils, ein Verfahren zur Herstellung einer Gelenkwelle und ein Gelenkwellenbauteil hergestellt mit einem solchen Verfahren.

Aus dem Stand der Technik sind beispielsweise Gleichlaufgelenke grundsätzlich bekannt. Gleichlaufgelenke werden insbesondere im Maschinenbau zur Verbindung zweier Antriebswellen eingesetzt. Eine besondere Form von Gleichlaufgelenken bilden die Gleichlaufverschiebegelenke mit zur Funktionsrichtung gerade oder schräg verlaufenden Laufbahnen; sogenannten Tripoden oder Cross-Grooves. Bei sogenannten Verschiebegelenken ermöglicht es das Gleichlaufgelenk, die über diese verbundene Antriebswelle in ihrer Länge zu ändern. Hierzu weist das Gleichlaufgelenk ein Gleichlaufgelenkaußenbauteil auf, welches an einem der zu verbindenden Wellenenden angeordnet ist und eine zu dem anderen Wellenende hin offene Tasche aufweist. In dieser Tasche wiederum ist ein Gleichlaufgelenkinnenbauteil des Gleichlaufgelenks längsverschieblich angeordnet, welches wiederum mit dem anderen zu verbindenden Wellenende verbunden ist. Durch die längsverschieblich miteinander verbundenen Gleichlaufgelenkbauteile kann somit eine Änderung der Länge der Antriebswelle bereitgestellt werden. Um die Gleichlaufgelenkbauteile relativ zueinander zu führen, weisen diese Bauteile sich im Wesentlichen in Funktionsrichtung erstreckende Laufbahnen auf, in denen Wälzkörper geführt aufgenommen sind. Bei einer relativen längsverschieblichen Bewegung der Gleichlaufgelenkbauteile zueinander rollen folglich die Wälzkörper in diesen Laufbahnen ab, während gleichzeitig eine Drehmomentübertragung ermöglicht wird. Die Wälzkörper in dem Gleichlaufgelenk sind in der Regel in einem Käfig gehalten.

Zur Herstellung von Laufbahnen und insbesondere der Laufbahnen des Gleichlaufgelenkaußenbauteils wird letzteres zunächst umformtechnisch bereitgestellt, während in einem abschließenden Fertigungsschritt die Laufbahnen mittels spanender Fertigungsverfahren oder Kaltkalibrieren endbearbeitet werden, um beispielsweise eine elliptische bzw. pagodische Form zu erzielen. Insbesondere sind hier Fräsen und Schleifen und dergleichen zu nennen.

Ein solches Verfahren, bei dem eine spanende oder prägende Nachbearbeitung an dem geformten Gleichlaufgelenkaußenbauteil, insbesondere von Vorsprüngen an der Innenseite der Gleichlaufgelenkaußenbauteils, erfolgt, wird beispielsweise in der DE 10 2016 216 833 A1 beschrieben. Aus der Veröffentlichung "Simulation in der Massivumformung. Industrieverband Massivumformung e. V." aus dem April 2013 ist es bekannt, dass Gelenkbauteile nach der Wärmebehandlung nicht mehr bearbeitet werden müssen.

Außerdem ist aus der KR 2009 010 0011 die Herstellung eines Kardangelenks bekannt, wobei ein formgebender Umformschritt das Kadergelenk in einer Maschine ausbildet. Aus der JP 2009 185930 A ist das Herstellen einer Gleichlaufgelenks bekannt und die KR 2014 0 066 029 A beschreibt das Herstellen einer Tripode.

Hiervon ausgehend macht es sich die vorliegende Erfindung zur Aufgabe ein Verfahren zur Herstellung eines Gelenkwellenbauteils bzw. einer Gelenkwelle bereitzustellen, das gegenüber den aus dem Stand der Technik bekannten Verfahren verbessert ist, insbesondere weniger aufwendig in Bezug auf die Fertigung des Gelenkwellenbauteils ist, ohne die hohen Anforderungen an Fertigungstoleranzen und an eine Prozesssicherheit für das Bilden der Gelenkwelle zu gefährden.

Die vorliegende Erfindung löst diese Aufgabe mit einem Verfahren zur Herstellung eines Gelenkwellenbauteils gemäß Anspruch 1 und mit einem Verfahren zur Herstellung einer Gelenkwelle gemäß Anspruch 12 und ein Gelenkwellenbauteil, hergestellt mit einem solchen Verfahren gemäß Anspruch 13. Weitere Ausführungsformen sind den abhängigen Ansprüchen und der Beschreibung zu entnehmen.

Gemäß einem ersten Aspekt der vorliegenden Erfindung ist ein Verfahren zur Herstellung eines Gelenkwellenbauteils, das über eine Funktionsfläche an ein weiteres Gelenkwellenbauteil zur Ausbildung eines Wellengelenks, insbesondere eines Gleichlaufgelenks, mittelbar oder unmittelbar anbindbar ist, vorgesehen, umfassend:
- Bereitstellen eines Rohlings, vorzugsweise eines stangenförmigen Rohlings, und
- Umformen des Rohlings in das Gelenkwellenbauteils mittels Warmumformung und/oder Halbwarmumformung,
wobei auf ein Kaltkalibrieren an einer Funktionsfläche, insbesondere an der gesamten Funktionsfläche, des umgeformten Gelenkwellenbauteils verzichtet wird.

Gegenüber den aus dem Stand der Technik bekannten Verfahren zur Herstellung eines Gelenkwellenbauteils ist es erfindungsgemäß vorgesehen, dass zumindest an den Funktionsflächen auf ein Kaltkalibrieren verzichtet wird. Es hat sich überraschenderweise herausgestellt, dass es möglich ist, im Rahmen der Warmumformung und/oder Halbwarmumformung die Funktionsflächen eines Gelenkwellenbauteils, insbesondere dessen Geometrie, derart festzulegen, dass sie den gehobenen Toleranzanforderungen an die Fertigung von Gelenkwellenbauteilen genügen. Insbesondere hat es sich in überraschender Weise herausgestellt, dass es möglich ist, Funktionsflächen derart auszugestalten, dass sie bereits nach dem Halbwarmumformen und/oder Warmumformen die gewünschte Geometrie aufweisen, die insbesondere eine optimale Drehmomentübertragung mit einer reduzierten Reibung gewährleisten. Durch den Verzicht auf ein Kaltkalibrieren nach dem Umformschritt wird dabei in vorteilhafter Weise auf einen zusätzlichen Arbeitsschritt im Verfahren zur Herstellung eines Gelenkwellenbauteils bzw. eines Wellengelenks verzichtet, wodurch der Fertigungsprozess beschleunigt wird und der Kostenaufwand zur Fertigung des Gelenkwellenbauteils reduziert werden kann. Darüber hinaus lässt sich der Aufwand für die Produktionsplanung reduzieren.

Es hat sich zudem mit Vorteil herausgestellt, dass eine Stirnseite, insbesondere eine Kopfstirnseite des Gelenkwellenbauteils gleichmäßig und in einem engen maßlichen Toleranzbereich (keine großen Höhenunterschiede, beherrschbare Längenkonstanz) realisiert werden kann. Dies macht eine zusätzliche Bearbeitung des Metallabtragens überflüssig.

Als Funktionsfläche wird insbesondere diejenige Fläche des Gelenkwellenbauteils verstanden, über die eine Kopplung an ein weiteres Gelenkwellenbauteils zur Ausbildung eines Wellengelenks erfolgt. Dabei kann das weitere Gelenkwellenbauteil mittelbar über Wälzkörper oder unmittelbar an der Funktionsfläche des Gelenkwellenbauteils anliegen. Durch das Anbinden bzw. die Kopplung bilden das Gelenkwellenbauteil und das weitere Gelenkwellenbauteil ein Wellengelenk, insbesondere ein Gleichlaufgelenk, wie zum Beispiel eine Tripode. Bevorzugt handelt es sich bei dem Gelenkwellenbauteil um das Gelenkwellenaußenbauteil, dessen Funktionsfläche eine Innengeometrie eines Mantelbereichs ist, die auch als "netshape" bekannt ist. Alternativ oder ergänzend ist es auch vorstellbar, dass es sich bei dem hergestellten Gelenkwellenbauteil um das Gelenkwelleninnenbauteil handelt, dessen Außengeometrie im Rahmen des Warmumformungs- oder Halbwarmumformungsschritts final gefertigt wird.

Sofern in dieser Anmeldung von Umformschritten gesprochen wird betreffen dies einzelne Abschnitt des gesamten Umformprozesses, d. h. des Umformens.

Während der Stand des Technik das Umformen bzw. ein Umformprozess aus mehreren Umformschritten vorsieht, dessen letzter Umformschritt das Kaltkalibrieren ist, ist es insbesondere vorgesehen, dass auf den nach dem Stand der Technik üblichen letzten Umformschritt, d. h. das Kaltkalibrieren, verzichtet wird. Das Kaltkalibrieren betrifft dabei den letzten Umformschritt im Umformprozess bzw. beim Umformen. Dieses Kaltkalibrieren ist somit Teil des Umformens und erfolgt bevorzugt ausschließlich durch ein prägendes und plastifizierendes Einwirken. Mit anderen Worten: es wird auf ein ausschließlich prägendes und plastifizierendes Einwirken verzichtet. Auch wenn das Kaltkalibrieren bei Raumtemperaturen oder niedrigeren Temperaturen (im Vergleich zum Warmumformen / Halbwarmumformen) erfolgt, wird der Fachmann diesen Arbeitsschritt dem Umformen zuschreiben. Mit anderen Worten: Das Umformen nach dem Stand der Technik umfasst mehrere Umformschritte, deren letzter Umformschritt das Kaltkalibrieren ist, mit dem die letzte durch prägende bzw. plastifizierende Einwirkung erfolgende Umformung der inneren und/oder äußeren Gestalt, insbesondere der Funktionsflächen, vorgenommen wird. Auf diesen Teil des Umformens wird verzichtet. Dabei kann sich an das Umformen eine Nacharbeitung anschließen. Beispielweise erfolgt im Anschluss an das Umformen eine spanende Bearbeitung und/oder ein Härten, um dem Gelenkwellenbauteil die fertige Form und Beschaffenheit zu verleihen.

Vorzugsweise wird beim Umformen auf das Kaltkalibrieren der Funktionsflächen verzichtet, d. h. es wird auf einen Teilabschnitt bzw. ein Teilarbeitsschritt beim Umformen verzichtet. Es hat sich in überraschender Weise herausgestellt, dass auf das Kaltkalibrieren, d. h. den letzten prägenden Umformschritt, verzichtet werden kann, ohne dass eine Beeinträchtigung für die Funktionsflächen des Gelenkwellenbauteils erfolgt. Dies ist insbesondere für Tripoden überraschend, da sie eine hohe Präzision in der Fertigung benötigen. Beispielsweise erfolgt im Stand der Technik ein Kaltkalibrieren in Form eines Abstreckens und/oder Maßprägen. Auf das Abstrecken und/oder Maßprägen wird vorliegend vorzugsweise verzichtet. Insbesondere ist das Gelenkwellenbauteil aus dem Werkstoff Cf 53, C 45, C 50, SAE J 403 1050 oder S 45 CJ gefertigt.

Vorzugsweise wird nach dem Umformen ohne Kaltkalibrieren ein Nachbearbeiten durchgeführt, beispielsweise in Form eines Härtens und/oder einer spanenden Bearbeitung. Dadurch kann den Gelenkwellenbauteil die gewünschte Beschaffenheit verliehen werden. Vorzugsweise erfolgt das Härten induktiv.

Zum Verzichten auf ein Kaltkalibrieren beim Umformen, beispielsweise beim Warmumformen und/oder Halbwarmumformen, wird erfindungsgemäß auf eine prägende oder plastifizierende Einwirkung auf das Gelenkwellenbauteil bei einer Temperatur unterhalb von 120°, bevorzugt unterhalb von 80° und besonders bevorzugt unterhalb von 50° verzichtet. Die Temperaturen werden dabei insbesondere zu Beginn des Umformenschritt gemessen.

Erfindungsgemäß e wird das Umformen, d. h. ein Umformen ohne Kaltkalibrieren, innerhalb eines Zeitintervalls abgeschlossen, das kürzer als 25 Sekunden und bevorzugt kürzer als 20 Sekunden und besonders bevorzugt kürzer 10 Sekunden ist. Dies trifft insbesondere auf solche Verfahren zu, bei denen ein Halbwarm- oder Warmumformung vorgesehen ist bzw. durchgeführt ist. Die Zeit des Umformens wird dabei festgelegt als das Zeitintervall zwischen der Übergabe an die Presse bzw. an das Umformwerkzeug und Erreichen der finalen Form bzw. Austrag aus des Umformwerkzeugs/der Presse. Bei der Warm- oder Halbwarmumformung werden dabei bevorzugt mehr als zwei Umformschritte, bevorzugt drei, vier oder fünf Umformschritte vollzogen. Das Kaltkalibrieren dauert in der Regel mindestens 6 Sekunden. Typischerweise dauert das Kaltkalibrieren zwischen 8 Sekunden und 25 Sekunden. Im Stand der Technik sind sogar Zeiten bis zu 30 Sekunden für das Kaltkalibrieren üblich, so dass mit dem Weglassen des Kaltkalibrierens die Zeit für das Umformen signifikant, zum Teil bis zu mehr als 60 %, reduziert werden kann.

Unter einem Kaltkalibrieren bzw. Kalibrieren versteht der Fachmann insbesondere, dass ein prägendes Nachbearbeiten am umgeformten Gelenkwellenbauteil erfolgt. Insbesondere erfolgt auch keine spanende Nachbearbeitung, vorzugsweise bei der Herstellung der Tripode. Damit wird mit Kaltkalibrieren insbesondere jegliche mechanische Behandlung, die zu einer Verformung und Formänderung am Gelenkwellenbauteil führt, verstanden, die bei einer Raumtemperatur oder in einem Temperaturintervall um +/- 25° C um Raumtemperatur erfolgt. Im Gegensatz zu dem aus dem Stand der Technik bekannten und etablierten Vorgehen, nämlich nach einem Umformschritt zunächst durch Kaltkalibrieren die finale Geometrie der Innenseite bzw. der Innengeometrie oder der Außenseite bzw. der Außengeometrie festzulegen, ist es somit bevorzugt vorgesehen, von diesem Vorgehen abzukehren und auf einen entsprechenden Kaltkalibrierungsschritt zu verzichten. Insbesondere wird auf ein Kaltkalibrieren verzichtet zur Erzeugung einer elliptische bzw. pagodische Form der Laufbahnen und/oder einer Gestalt in Form eines Doppelkegels ("Sanduhrform"). Vorzugsweise wird die elliptische bzw. pagodische Form der Laufbahnen bzw. eine Gestalt in Form eines Doppelkegels bereits im Halbwarmprozess hergestellt. Vorzugsweise wird auf ein Kaltkalibrieren der Laufbahnen verzichtet.

Dabei kann es sich bei dem Gleichlaufgelenk vorzugsweise um ein Verschiebegelenk und/oder ein Festgelenk handeln. Dabei ist es beispielseise vorstellbar, dass das Wellengelenk bzw. insbesondere das Gleichlaufgelenk, Teil einer Triebwelle ist und/oder in einem Antriebsstrang eines Fahrzeugs ausgebildet ist. Beispielsweise handelt es sich um ein Gelenkwellenbauteil mit einer Innengeometrie gemäß einer Tripoden- und/oder Polygonenform. Denkbar sind auch mindestens drei bis zehn Laufbahnen, die eine erhöhte Anforderung hinsichtlich einer Oberflächengüte und Maßhaltigkeit erfordern. Hier hat es sich herausgestellt, dass bereits mit dem Warm- und/oder Halbwarmumformen die gewünschte Oberflächengüte und Maßhaltigkeit auch für solche Gelenkwellenbauteile realisierbar ist, die mit entsprechenden Laufbahnen versehen sind und als Tripode ausgestaltet sind. Solche Gelenkwellenbauteile haben besonders hohe maßliche Toleranzvorgaben.

Gemäß einer bevorzugten Ausführungsform ist es vorgesehen, dass der Rohling in das Gelenkwellenbauteil bei einer Temperatur zwischen 50 °C und 1250 °C, bevorzugt zwischen 300 °C und 1250 °C und besonders bevorzugt zwischen 700°C und 1250 °C umgeformt wird. Beispielsweise wird eine Temperatur des Rohlings gezielt, insbesondere abschnittsselektiv bzw. abschnittsweise, mittels einer induktiven Erwärmvorrichtung eingestellt, insbesondere indem umzuformende Teilabschnitte des Rohlings entsprechend erwärmt werden.

Besonders bevorzugt ist es vorgesehen, dass auf ein Kaltkalibrieren, insbesondere auf einen spanenden oder prägenden Nachbearbeitungsschritt, am gesamten Gelenkwellenbauteil verzichtet wird. Es wird in entsprechender Weise sowohl darauf verzichtet, die Innengeometrie als auch die Außengeometrie des Gelenkwellenbauteils in einem nachfolgenden Kaltkalibrieren noch zu modifizieren. Somit entfällt jeglicher Nachbehandlungsschritt nach dem Erwärmen und/oder Umformen. Vorzugsweise ist es vorgesehen, dass unmittelbar nach einem Abkühlen des umgeformten Gelenkwellenbauteils eine Anbindung an das weiteres Gelenkwellenbauteil erfolgt. Insbesondere ist dabei "unmittelbar nach dem Umformprozess" so zu verstehen, dass keine weitere Umformung und/oder Gestaltungsmaßnahme am Gelenkwellenbauteil, die Einfluss nimmt auf die Geometrie oder Form des Gelenkwellenbauteils oder auf eine Verfestigung der Werkstückoberfläche, vollzogen wird bis das Gelenkwellenbauteil und das weitere Gelenkwellenbauteil zur Ausbildung eines Gleichlaufgelenks bzw. eines Wellengelenks miteinander verbunden werden.

Vorzugsweise ist es vorgesehen, dass der Rohling vor dem Umformen mindestens abschnittsweise mit einem Betriebshilfsstoff zur Trenn- und/oder Gleitschicht zwischen dem Rohling und einem Werkzeug zur Umformung des Rohlings beschichtet wird. Dabei ist es vorstellbar, dass vor dem Umformen, d. h. einer dauerhaft plastischen Verformung des Rohlings bzw. eines Abschnitts des Rohlings, eine Beschichtung des Rohlings bzw. eines Teilabschnitts des Rohlings erfolgt, die vorzugsweise abhängig vom Rohling und/oder dem zu fertigen Gelenkwellenbauteil sich hinsichtlich Konzentration, Menge und/oder Temperatur angepasst ist.

Das Aufbringen eines solchen Betriebshilfsstoffs kann hierbei sowohl außerhalb einer Prozesskette, d. h. eines oder mehrerer Umformschritte, erfolgen oder vorzugsweise innerhalb eines Umformschritts. Der Betriebshilfsstoff ist dabei vorzugsweise dazu vorgesehen, unkontrollierte und unerwünschte Diffusionsvorgänge zu unterbinden, die andernfalls zwischen dem Werkzeug zum Umformen und dem Rohling erfolgen könnten, was allerdings durch die Schaffung einer Trenn- und Gleitschicht zwischen dem Rohling und dem Werkzeug verhindert werden kann.

Vorzugsweise ist es vorgesehen, dass eine Temperaturführung beim Erwärmen und/oder einem Abkühlen des Rohlings und/oder eines Abschnitts des Rohlings dabei derart ausgestaltet ist, dass eine unerwünschte Zunderbildung und/oder Oxidschichtbildung reduziert oder gar vermieden wird.

Weiterhin ist es bevorzugt vorgesehen, dass während des Umformens eine kontrollierte Zuführung von Betriebshilfsstoffen erfolgt, die insbesondere einem Erreichen von notwendigen tribologischen Eigenschaften im Wirkspalt von Rohling und Werkzeug dient. Weiterhin kann mittels des Zuführens von Betriebshilfsstoffen während des Umformprozesses, insbesondere abhängig vom Zeitpunkt, Zeitdauer, Lage und Menge des Zuführens des Betriebshilfsstoffes bewirkt werden, dass eine Menge an möglicherweise auftretenden Rückständen am Rohling reduziert werden kann.

Vorzugsweise ist es vorgesehen, dass die Temperaturänderung zwischen Beginn des Umformens und Ende des Umformens in einem Temperaturintervall liegt, das kleiner als 500 °C, bevorzugt kleiner als 250 °C und besonders bevorzugt kleiner als 50 °C ist, vorzugsweise abhängig von einer geometrischen Ausprägung des Bauteils. Es hat sich herausgestellt, dass mit dem Einhalten des besagten Temperaturintervalls gewährleistet werden kann, dass die gewünschten Toleranzen und Maßhaltigkeiten am gefertigten Gelenkwellenbauteil realisierbar sind. Dabei kann es sich um einen einzelnen Umformschritt, beispielsweise einen nicht unterbrochenen Pressendurchlauf, handeln oder um einen mehrstufigen bzw. mehrfachen Umformprozess mit mehreren Umformschritten, beispielsweise eine Umformsequenz mit mehreren Pressdurchläufen. Um zu gewährleisten, dass die Temperatur innerhalb des gewählten Temperaturintervalls bleibt, ist es mit Vorteil vorgesehen, dass der Umformprozess zeitnah erfolgt, d. h. keine weiteren oder zahlreichen Zwischenbehandlungen während der Umformschritte oder zwischen den einzelnen Umformschritten vollzogen werden. Insbesondere wird das Umformen derart gesteuert, dass ein im Rohling oder im umzuformendem Abschnitt des Rohlings vorgegebener Faserverlauf - festgelegt durch Mangansulfide- während des Umformprozesses so gesteuert wird, dass Funktionsflächen, insbesondere die Laufbahnen, frei von senkrecht bis hin zu waagrechten zu dieser Funktionsfläche austretenden schädigenden Faserverläufen, d. h. Mangansulfiden, sind. Dadurch lässt sich die Lebensdauer des Gelenkwellenbauteils verbessern.

Besonders bevorzugt ist es vorgesehen, dass sich an das Umformen ein Abkühlprozess anschließt. Damit ist ein aktives Abkühlen vorgesehen, d. h. es wird aktiv Einfluss genommen auf das Abkühlen des Gelenkwellenbauteils. Statt das Gelenkwellenbauteil einfach abkühlen zu lassen (d. h. ohne zusätzliche Maßnahmen) ist es beispielsweise durch das Schaffen einer entsprechenden Atmosphäre und einer entsprechenden Steuerung des Abkühlprozesses möglich, dass keine nachfolgenden Wärmebehandlungsprozesse zum Erreichen von gewünschten Material- sowie Bauteileigenschaften, wie Härte und Korngröße, notwendig sind. Vorstellbar ist, dass dennoch zusätzlich ein separater Wärmebehandlungsprozess durchgeführt wird. Zur Steuerung des Abkühlprozesses ist es bevorzugt vorgesehen, dass entsprechende Abkühlparameter so gewählt werden, dass eine Zunderbildung und/oder Oxidschichtbildung reduziert oder sogar verhindert wird. Beispielsweise lässt sich der Abkühlprozess durch eine entsprechende Umlagerung und/oder Verlagerung der Bauteile, beispielsweise ein wiederholtes bzw. frequenz- oder sequenzgesteuertes Verdrehen und/oder Umorientieren der Gelenkwellenbauteile im Anschluss an den Umformprozess realisieren. Alternativ oder ergänzend ist es vorstellbar, dass ein Medium die gefertigten Gelenkwellenbauteile umströmt bzw. dazu verwendet wird. abschnittsweise bzw. abschnittsselektiv Teile bzw. Abschnitte des Gelenkwellenbauteils derart zu beaufschlagen, dass sich unterschiedliche Abkühlzonen am Gelenkwellenbauteil einstellen. Dabei ist es insbesondere vorgesehen, dass ein entsprechender Medienstrom, insbesondere Luftstrom, derart angesteuert bzw. gesteuert wird, dass sich ein Stromvolumen zeitlich modelliert, insbesondere angepasst ist an die räumliche Gestalt des jeweiligen Abschnitts bzw. des Gelenkwellenbauteils an sich. Weiterhin ist es vorstellbar, dass das umströmende Medium mittels Begrenzungseinrichtung dahingehend räumlich modelliert wird und/oder räumlich begrenzt wird, dass eine entsprechende räumliche Profilierung des Medienstroms eingestellt wird, die Einfluss nehmen kann auf die geforderten Bauteile und Materialeigenschaften, insbesondere der jeweiligen Abschnitte des Gelenkwellenbauteils.

Weiterhin ist es besonders bevorzugt vorgesehen, dass auf die Zufuhr von Sauerstoff verzichtet wird und/oder der Sauerstoffanteil des zugeführten Medienstroms reduziert wird, um eine entsprechende Verzunderung oder die Bildung einer Oxidationsschicht zu reduzieren oder gar zu verhindern.

Eine weitere Maßnahme, um den Abkühlprozess zu kontrollieren, ist beispielsweise ein Einstellen der Geschwindigkeit mit der die gefertigten Gelenkwellenbauteile nach dem Umformprozess transportiert werden. Insbesondere durch das entsprechende Einstellen der Geschwindigkeit an einem Transportmittel, das sich anschließt an ein Umformwerkzeug bzw. an das Werkzeug zum Umformen, ist es in vorteilhafter Weise möglich, Einfluss zu nehmen auf den Abkühlprozess und somit auf die Material- und Bauteileigenschaften des umgeformten Gelenkwellenbauteils.

Bevorzugt ist es vorgesehen, dass das Verlassen der Einrichtung zur Einstellung der Bauteil- und Materialeigenschaften mittels des die Gelenkwellenbauteile kontrolliert umströmende Mediums derart gestaltet ist, dass mechanische Vorkehrungen vorgesehen sind, die geschwindigkeitsregelnd auf die Gelenkwellenbauteile wirken, umso etwaig unkontrollierte und unerwünschte auftretende Oberflächenungänzen im Innen- und Außenbereich des Gelenkwellenbauteils zu reduzieren bzw. zu vermeiden. Sollte sich entgegen der vorstehenden beschriebenen Maßnahmen, deren Hauptaugenmerk auf einer Reduzierung der Zunderbildung ausgerichtet sind, dennoch nicht der gewünschten Erfolg einstellen ( z. B. aufgrund geforderter Werkstoffe, bei denen die vorangegangenen beschriebenen Maßnahmen zur Zunderbildungsreduktion bzw. Vermeidung keine Wirkung entfalten), kann dies im Nachgang zum plastischen Verformungsprozess durch einen nachgeschalteten, materialabtragenden Reinigungsprozess erreicht werden.

Vorzugsweise ist es vorgesehen, dass das Gelenkwellenbauteil einen Kopfabschnitt umfasst, der einen Bodenbereich und einen sich im Wesentlichen axial erstreckenden Mantelbereich aufweist, welcher einen im Wesentlichen zylindrischen Hohlraum seitlich umgibt, wobei der Hohlraum an einem axialen Ende eine Öffnung aufweist, um das weitere Gelenkwellenbauteil axial verschiebbar aufzunehmen. Damit handelt es sich vorzugsweise um ein Gelenkwellenaußenbauteil, dessen Innengeometrie dazu ausgelegt ist, ein Verschiebegelenk zu realisieren. Dabei kann das Gelenkwellenbauteil ausschließlich aus einem Kopfabschnitt bestehen und/oder zuzüglich einen Schaftabschnitt aufweisen, der Teil der Welle ist und/oder eine Anschlussmöglichkeit an eine Welle gewährleistet. Alternativ ist es vorstellbar, dass der Bodenbereich als Kragen und/oder Flanschbereich zur Aufnahme eines Rohrstücks, das als Welle einer Gelenkwelle dient, ausgebildet ist. Denkbar sind auch entsprechende Rohrabschnitte oder Rohrstummel, die in einem Bodenbereich integriert sind, um eine Anbindung an eine etwaige Welle zu gewährleisten.

Vorzugsweise ist es vorgesehen, dass der Mantelbereich auf seiner dem Hohlraum zugewandten Seite mindestens eine Laufbahn für Wälzkörper aufweist. Beispielsweise handelt es sich um eine Laufbahn für eine Kugel, die in einem Käfig geführt ist, wobei der Käfig vorzugsweise durch Vorsprünge an der Innenseite des Mantelbereichs festgelegt wird. Durch entsprechende Einstellung der geometrischen Form der Laufbahn ist es in vorteilhafter Weise möglich, eine Reibung zwischen Wälzkörper und Gelenkwellenbauteil zu reduzieren, womit eine reibungsarme Drehmomentübertragung mit der Gelenkwelle möglich ist. Beispielsweise sind die Laufbahnen als "cross-grooves" ausgeformt. Bevorzugt handelt es sich um ein Fest- und/oder Verschiebegelenk. Vorstellbar ist beispielsweise ein Rzeppa-Gelenk. Besonders bevorzugt handelt es sich um eine Tripode. -

Ein weiterer Gegenstand der vorliegenden Erfindung ist ein Verfahren zur Herstellung eines Wellengelenks, umfassend:
- Bereitstellen des erfindungsgemäßen Gelenkwellenbauteils und des weiteren Gelenkwellenbauteils und
- Anbinden des weiteren Gelenkwellenbauteils an das Gelenkwellenbauteil zur Ausbildung des Wellengelenks.

Alle für das Verfahren zur Herstellung eines Gelenkwellenbauteils beschriebenen Eigenschaften und Vorteile lassen sich analog übertragen auf das Verfahren zur Herstellung eines Wellengelenks.

Ein weiterer Gegenstand der vorliegenden Erfindung ist ein Gelenkwellenbauteil, hergestellt mit einem erfindungsgemäßen Verfahren. Alle für das Verfahren zur Herstellung des Gelenkwellenbauteils beschriebenen Vorteile und Eigenschaften lassen sich analog übertragen auf das Gelenkwellenbauteil und andersrum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig. 1**: ein Flussdiagramm zur schematischen Darstellung eines Verfahrens zur Herstellung eines Gelenkwellenbauteils gemäß einer weiteren beispielhaften Ausführungsform der vorliegende Erfindung.
- **Fig. 2**: eine schematische Darstellung eines Gelenkwellenbauteils gemäß einer ersten beispielhaften Ausführungsform der vorliegenden Erfindung;
- **Fig. 3**: eine schematische Darstellung eines Gelenkwellenbauteils gemäß einer zweiten beispielhaften Ausführungsform der vorliegenden Erfindung;
- **Fig. 4**: eine schematische Darstellung eines Gelenkwellenbauteils gemäß einer dritten beispielhaften Ausführungsform der vorliegenden Erfindung und
- **Fig. 5**: eine schematische Darstellung eines Gelenkwellenbauteils gemäß einer vierten beispielhaften Ausführungsform der vorliegenden Erfindung.

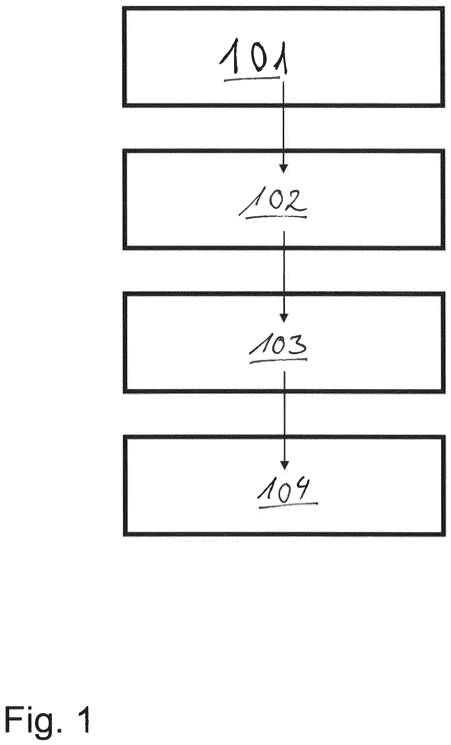

In **Figur 1** ist in Form eines Flussdiagramms ein Verfahren zur Herstellung eines Gelenkwellenbauteils 1 gemäß einer bevorzugten Ausführungsform der vorliegenden Erfindung dargestellt. Dabei wird zunächst ein stangenförmiger Rohling bereitgestellt, welcher in einem Fließpressvorgang über seine Längsachse L gesehen grob in Bereiche unterschiedlichen Querschnitts umgeformt wird, um einen Zwischenrohling zu bilden. In einem weiteren Schritt wird der Zwischenrohling weiter ungeformt, um das Gelenkwellenbauteil 1 zu erhalten.

Das Gelenkwellenbauteil 1 weist einen Bodenbereich 7 und einen sich axial erstreckenden Mantelbereich 5 auf, welcher einen im Wesentlichen zylindrischen Hohlraum seitlich umgibt. Der Hohlraum weist an einem axialen Ende eine Öffnung auf, um beispielsweise über radial innen angeordnete Kugeln ein Gleichlaufgelenkinnenbauteil (nicht dargestellt) wenigstens teilweise axial verschiebbar aufzunehmen. An dem der Öffnung gegenüberliegenden axialen Ende ist der Hohlraum durch den Bodenbereich 7 in dem hier dargestellten Beispiel verschlossen. Der Mantelbereich 5 erstreckt sich somit von einer Seite des Bodenbereichs 7 axial weg.

Der Mantelbereich 5 weist auf seiner den Hohlraum begrenzenden Innenseite wenigstens zwei sich zwischen der Öffnung und dem Bodenbereich 7 erstreckende Laufbahnen 11 auf, insbesondere Kugellaufbahnen, die zur Führung von zwischen dem Gleichlaufgelenkaußenbauteil und einem in dieses eingesetzten Gleichlaufgelenkinnenbauteil radial angeordneten Wälzkörpern (nicht dargestellt), insbesondere Kugeln, dienen. Die Laufbahnen 11 sind dabei vorzugsweise seitlich an nach innenstehenden Vorsprüngen 13 ausgebildet, wobei die die Laufbahnen 11 in Umlaufrichtung gesehen einen Freiraum zwischen zwei Vorsprüngen 13 begrenzen.

Um eine sichere Auflage der Wälzkörper auf den Laufbahnen 11 zu gewährleisten und eine Belastung der einzelnen Wälzkörper gleichzeitig möglichst gering zu halten, werden hohe Anforderungen an die geometrische Form der Laufbahnen 11 bzw. an eine gesamte Innengeometrie des Gelenkwellenbauteils 1, die so insbesondere als Funktionsfläche für die Anbindung des Gelenkwellenbauteils 1 an ein weiteres Gelenkwellenbauteil dient, gestellt.

Insbesondere zeichnet sich das Verfahren dadurch aus, dass auf ein Kaltkalibrieren, insbesondere einen spanenden oder prägenden Nachbearbeitungsschritt, verzichtet wird. Es hat sich dabei in überraschender Weise herausgestellt, dass - nach einem Bereitstellen 101 eines Rohlings- im Rahmen eines Umformens 102 des Rohlings in das Gelenkwellenbauteil 1 mittels Warmumformung und/oder Halbwarmumformung eine Funktionsfläche, insbesondere eine Innengeometrie des Gelenkwellenbauteils 1, bereitgestellt werden kann, die nicht nur die Anbindung an ein weiteres Gelenkwellenbauteils zur Ausbildung eines Wellengelenks, insbesondere eines Gleichlaufgelenks, erlaubt, sondern darüber hinaus Laufbahnen 11 gewährleistet, die die gewünschten Eigenschaften zur möglichst reibungsarmen Drehmomentübertragung des Wellengelenks garantiert. Dabei kann insbesondere im Falle von Gleichlaufgelenken sichergestellt werden, dass das Verzichten auf das Kaltkalibrieren auch die vorteilhafte reibungsreduzierte Drehmomentübertragung nicht beeinträchtigt.

Vorzugsweise sieht es deswegen das Verfahren zur Herstellung eines Gelenkwellenbauteils 1 vor, dass zunächst ein Rohling, vorzugsweise ein stangenförmiger Rohling, bereitgestellt wird und in einem anschließenden Umformen 102 des Rohlings das Gelenkwellenbauteil 1 bereitgestellt wird, ohne dass die Innengeometrie mit einem anschließendem Nachbearbeitungsschritt, insbesondere einem Kaltkalibrieren, weiter modifiziert wird, d. h. in seiner Form umgestaltet wird. Vorzugsweise wird dabei der Rohling in das Gelenkwellenbauteil 1 bei einer Temperatur zwischen 50 °C und 1250 °C, bevorzugt zwischen 300 °C und 1250 °C und besonders bevorzugt zwischen 700 °C und 1250 °C umgeformt. Beispielsweise wird für das Umformen 102 die gewünschte Temperatur des Rohlings, vorzugsweise abschnittsweise, induktiv im Rohling verursacht. Weiterhin ist es bevorzugt vorgesehen, dass auf einen spanenden oder prägenden Nachbearbeitungsschritt am gesamten Gelenkwellenbauteil 1 verzichtet wird. Mit anderen Worten: auch die Au-ßengeometrie des Gelenkwellenbauteils 1 wird nicht durch ein Kaltkalibrieren im Anschluss an die Herstellung mittels Warmumformung und/oder Halbwarmumformung weiter modifiziert.

Insbesondere ist es vorgesehen, dass der Rohling vor dem Umformen 102 mindestens abschnittsweise mit einem Betriebshilfsstoff zur Ausbildung einer Trenn- und/oder Gleitschicht zwischen dem Rohling und einem Werkzeug zur Umformung des Rohlings beschichtet wird. Das Aufbringen des Betriebshilfsstoffes kann hierbei sowohl außerhalb einer Prozesskette von Umformschritten, aber vorzugsweise innerhalb eines Umformschritts oder zwischen zwei Umformschritten erfolgen. Der Betriebshilfsstoff dient hierbei der Unterbindung unkontrollierter und unerwünschter Diffusionsvorgänge zwischen einem Werkzeug, das die Umformung veranlasst, und dem Rohling, was durch die Schaffung einer Trenn- und/oder Gleitschicht zwischen Rohling und Werkzeug erreicht wird.

Darüber hinaus ist es bevorzugt vorgesehen, dass nach dem Umformen 102 ein Abkühlprozess 103 durchgeführt wird. Dieser Abkühlprozess 103 wird dabei derart gesteuert, dass eine Zunderbildung und/oder eine Oxidschichtbildung reduziert oder sogar verhindert wird. Dies kann beispielsweise durch eine sequenz- bzw. frequenzgesteuerte, d. h. eine zeitlich modulierte, räumliche Umorientierung der Bauteile, d. h. eines der Zwischenrohlinge oder des Gelenkwellenbauteils, beispielswiese einem Drehen oder Verlagern, nach dem Umformen 102 erfolgen und/oder die gefertigten Gelenkwellenbauteile 1 werden nach dem Umformen 102 einem umströmendem Medium, vorzugsweise Luft, ausgesetzt. Hierbei ist es insbesondere vorgesehen, dass entsprechende Strömungsgeschwindigkeiten des umströmenden Mediums in Abhängigkeit von der zeitlichen und räumlichen Umorientierung der Bauteile eingestellt werden.

Insbesondere ist es vorstellbar, durch Begrenzungseinrichtungen die umgeformten Gelenkwellenbauteile 1 oder Zwischenrohlingen abschnittsweise einem umströmenden Medium auszusetzen, um dadurch gezielt abschnittsweise Bauteil- und/oder Materialeigenschaften des Gelenkwellenbauteils 1 zu modifizieren bzw. einzustellen. Insbesondere lassen sich so Härte, Korngröße und ähnliche Eigenschaften an dem hergestellten Gelenkwellenbauteil 1 einstellen. Weiterhin ist es vorstellbar, dass zusätzlich eine Sauerstoffzufuhr unterbunden wird, die eine Verzunderung oder eine Bildung einer Oxidationsschicht reduziert bzw. verhindert. Weiterhin ist es denkbar, dass ein Transportmittel, mit dem die gefertigten Gelenkwellenbauteile 1 nach Ihrer Umformung 102 transportiert werden, seine Geschwindigkeit anpasst, um die Eigenschaften des gefertigten Gelenkwellenbauteils 1 zu beeinflussen.

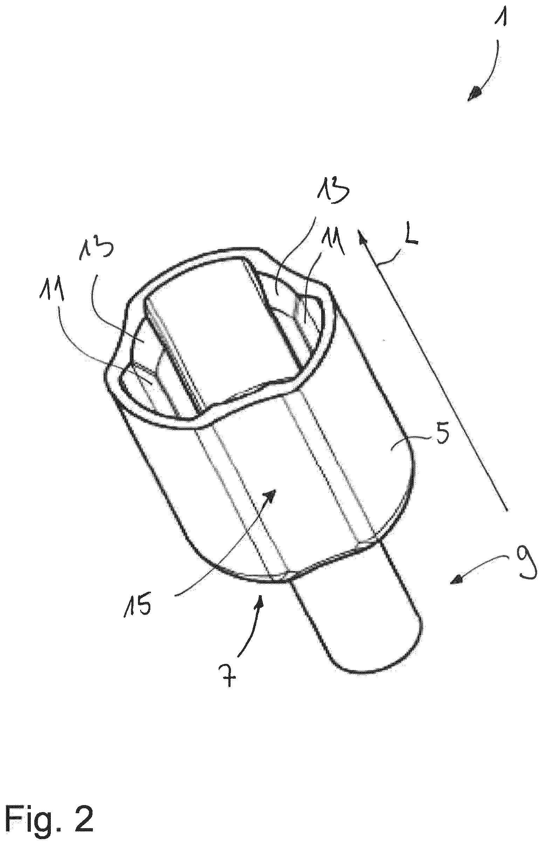

In **Figur 2** ist eine schematische Darstellung eines Gelenkwellenbauteils 1 gemäß einer ersten beispielhaften Ausführungsform der vorliegenden Erfindung dargestellt. Insbesondere ist ein Gelenkwellenaußenbauteil 1 mit mehreren Laufbahnen 11 gezeigt, die durch entsprechende in den Hohlraum hineinragende und an einer Innenseite der Mantelfläche 5 ausgebildeten Vorsprünge 13 voneinander getrennt sind. Dabei handelt es sich bei dem Ausführungsbeispiel in Figur 2 um ein GI (Glänzer Interieur)-Gelenk. Insbesondere ist das Gelenkwellenaußenbauteil im Bereich der Vorsprünge 11 am Außenumfang mit entsprechenden Einbuchtungen 15 versehen. Dadurch wird ein vergleichsweise leichtes Gelenkwellenaußenbauteil bzw. Gelenkwellenbauteil 1 bereitgestellt. Insbesondere handelt es sich bei dem dargestellten Gelenkwellenbauteil 1 um eine Tripode mit einem Kopfabschnitt 3 und einem Schaftabschnitt 9. Der Schaftabschnitt 9 erstreckt sich dabei in der Längsrichtung L mit einem konstanten Querschnitt. Vorzugsweise sind die Laufbahnen 11 an den Seiten der Vorsprünge 13 ausgebildet, insbesondere den Seiten, die in Umlaufrichtung gesehen die Vorsprünge 13 begrenzen. Dabei verlaufen die Laufbahnen 11 vorzugsweise gerade und/oder schräg zur radialen Richtung (von einer Symmetrieachse bzw. der Längsachse L des Gelenkwellenbauteils 1 aus gesehen), um eine entsprechende Auflage für den Wälzkörper zu bilden.

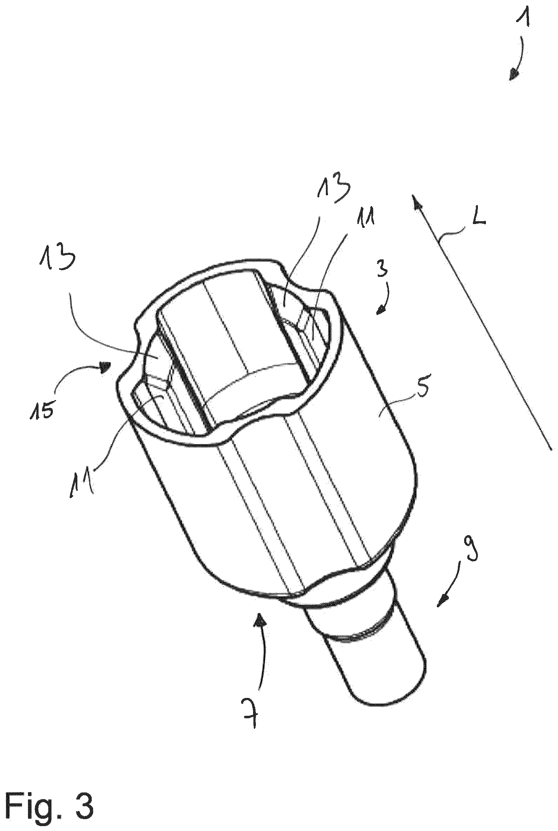

In **Figur 3** ist ein Gelenkwellenbauteil 1 gemäß einer zweiten beispielhaften Ausführungsform der vorliegenden Erfindung dargestellt. Insbesondere ist es hierbei vorgesehen, dass sich das Gelenkwellenbauteil 1 aus der Figur 3 im Wesentlichen nur dahingehend von der Ausführungsform in Figur 2 unterscheidet, dass der Schaftbereich 9 in Längsrichtung L gesehen einen gestuften Verlauf aufweist. Mit anderen Worten: der Schaftbereich 9 ist abgesetzt, vorzugsweise mehrmals abgesetzt.

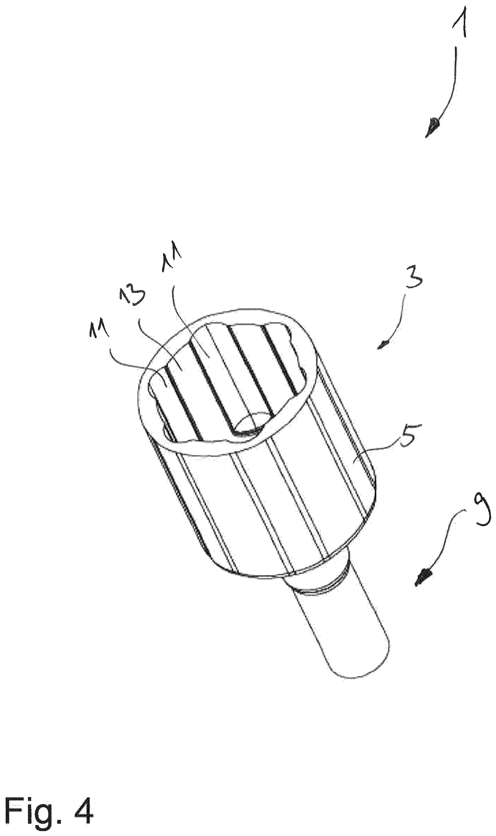

In dem in **Figur 4** dargestellten dritten Ausführungsbeispiel der vorliegenden Erfindung ist ein Gelenkwellenbauteil 1 für ein DO-Gelenk (doppeltes Offset Gelenk) dargestellt. Ein solches DO-Gelenk stellt insbesondere eine Kombination aus einem Kugel- und Tripoden-Verschiebegelenk dar, das sich als besonders vorteilhaft erweist bei einem begrenzten Bauraum für das Gelenk. Dabei ist es insbesondere vorgesehen, dass der Schaftbereich 9 mehrteilig ist und insbesondere einen Rohrabschnitt aufweist, an dem in Längsrichtung L bzw. in axialer Richtung gesehen eine Welle oder ein separater Wellenabschnitt anbindbar ist.

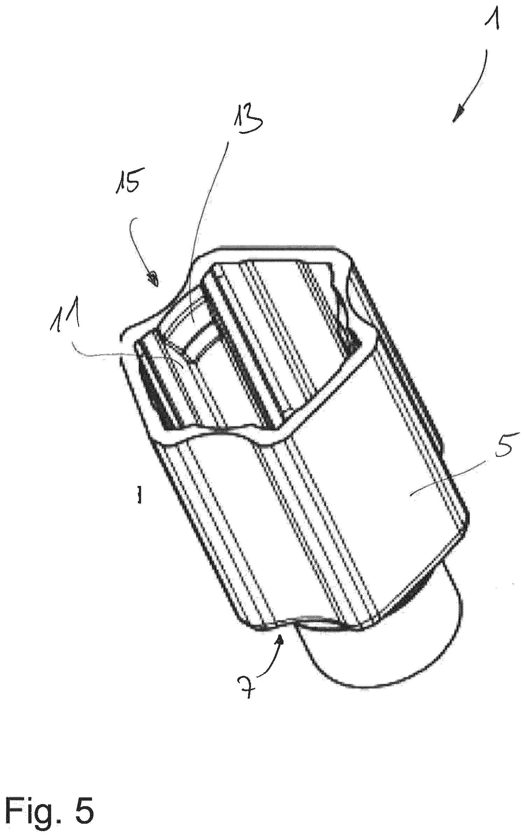

In **Figur 5** ist ein viertes Ausführungsbeispiel der vorliegenden Erfindung dargestellt. Dabei unterscheidet sich das in Figur 5 dargestellte Ausführungsbeispiel von demjenigen aus Figur 2 dahingehend, dass die Laufbahnen 11 eben sind, d. h. nicht einen gekrümmten Verlauf für die Wälzköper aufweisen. Dabei handelt es sich bei dem Ausführungsbeispiel in Figur 5 um ein AAR (angular adjusted Roller) -Gelenk Darüber hinaus ist es vorgesehen, dass in dem hier dargestellten Gelenkwellenaußenbauteil der Bodenbereich 7 nicht geschlossen ist und insbesondere eine Öffnung aufweist, in die wiederrum ein Rohrstück und/oder ein Wellenbauteil einsetzbar und anbindbar ist.

### Bezugszeichenliste:

- 1: Gelenkwellenbauteil
- 3: Kopfabschnitt
- 5: Mantelbereich
- 8: Hohlbereich
- 7: Bodenbereich
- 9: Schaftabschnitt
- 11: Laufbahn
- 13: Vorsprung
- 15: Einbuchtung
- 101: Bereitstellen
- 102: Umformen
- 103: Abkühlprozess
- 104: Anbinden
- L: Längsachse

## Patentansprüche

1. Verfahren zur Herstellung eines Gelenkwellenbauteils (1), das über eine Funktionsfläche an ein weiteres Gelenkwellenbauteil zur Ausbildung eines Wellengelenks, insbesondere eines Gleichlaufgelenks, mittelbar oder unmittelbar anbindbar ist, umfassend:
- Bereitstellen (101) eines Rohlings, vorzugsweise eines stangenförmigen Rohling, und
- Umformen (102) des Rohlings in das Gelenkwellenbauteils (1) mittels Warmumformung und/oder Halbwarmumformung,
**dadurch gekennzeichnet, dass** auf ein Kaltkalibrieren an der Funktionsfläche, insbesondere an der gesamten Funktionsfläche, des umgeformten Gelenkwellenbauteils (1) verzichtet wird, **dadurch gekennzeichnet, dass**
- zum Verzichten auf ein Kaltkalibrieren beim Umformen (102), beispielsweise nach dem Warmumformen und/oder Halbwarmumformen, auf eine prägende oder plastifizierendes Einwirkung auf das Gelenkwellenbauteil (1) bei einer Temperatur unterhalb von 120 °C, bevorzugt unterhalb von 80 °C und besonders bevorzugt unterhalb von 50 °C verzichtet wird und/oder
- das Umformen (102) innerhalb eines Zeitintervalls abgeschlossen ist, das kürzer als 25 Sekunden und bevorzugt kürzer als 20 Sekunden und besonders bevorzugt kürzer 10 Sekunden ist.

2. Verfahren gemäß Anspruch 1, wobei beim Umformen auf das Kaltkalibrieren, beispielsweise auf ein Abstrecken und/oder Maßprägen, der Funktionsflächen verzichtet wird.

3. Verfahren gemäß einem der vorhergehenden Ansprüche, wobei das Gelenkwellenbauteil (1) aus dem Werkstoff Cf 53, C 45, C50 SAE J 403 1050 oder S 45 CJ gefertigt wird.

4. Verfahren gemäß einem der vorhergehenden Ansprüche, wobei nach dem Umformen (102) ohne Kaltkalibrieren ein Nachbearbeiten durchgeführt wird, beispielsweise in Form eines Härtens und/oder einer spanenden Bearbeitung.

5. Verfahren gemäß einem der vorhergehenden Ansprüche, wobei der Rohling in das Gelenkwellenbauteil (1) bei einer Temperatur zwischen 50 °C und 1250°C, bevorzugt zwischen 300 °C und 1250°C und besonders bevorzugt zwischen 700 °C und 1250 °C umgeformt wird.

6. Verfahren gemäß einem der vorhergehenden Ansprüche, wobei auf das Kaltkalibrieren am gesamten Gelenkwellenbauteil (1) verzichtet wird.

7. Verfahren gemäß einem der vorhergehenden Ansprüche, wobei der Rohling vor dem Umformen mindestens abschnittsweise mit einem Betriebshilfsstoff zur Ausbildung einer Trenn- und/oder Gleitschicht zwischen dem Rohling und einem Werkzeug zur Umformung des Rohlings beschichtet wird.

8. Verfahren gemäß einem der vorhergehenden Ansprüche, wobei die Temperaturänderung zwischen Beginn des Umformens (102) und Ende des Umformens (102) in einem Temperaturintervall liegt, das kleiner als 500 °C, bevorzugt kleiner als 250 °C und besonders bevorzugt kleiner als 50 °C ist, vorzugsweise abhängig von einer geometrischen Ausprägung des Bauteils bzw. des Rohling.

9. Verfahren gemäß einem der vorhergehenden Ansprüche, wobei sich an das Umformen (102) ein Abkühlprozess (103) anschließt.

10. Verfahren gemäß einem der vorhergehenden Ansprüche, wobei das Gelenkwellenbauteil (1) einen Kopfabschnitt (3) umfasst, der einen Bodenbereich (7) und einen sich im Wesentlichen axial erstreckenden Mantelbereich (5) aufweist, welcher einen im Wesentlichen zylindrischen Hohlraum seitlich umgibt, wobei der Hohlraum an einem axialen Ende eine Öffnung aufweist, um das weitere Gelenkwellenbauteil axial verschiebbar aufzunehmen.

11. Verfahren gemäß Anspruch 10, wobei der Mantelbereich auf seiner dem Hohlraum zugewandten Seite mindestens eine Wälzkörperlaufbahn aufweist.

12. Verfahren zum Zusammenbauen eines Wellengelenks, umfassend:
- Bereitstellen des Gelenkwellenbauteils (1) gemäß einem Verfahren gemäß einem der vorhergehenden Ansprüche und des weiteren Gelenkwellenbauteils; und
- Anbinden (104) des weiteren Gelenkwellenbauteils (1) an das Gelenkwellenbauteil zur Ausbildung des Wellengelenks.

13. Gelenkwellenbauteil hergestellt mit einem Verfahren gemäß einem der Ansprüche 1 bis 11.

## Claims

1. A method for producing an articulated shaft component (1) which can indirectly or directly connected via a functional surface to another articulated shaft component to form a shaft joint, in particular a constant velocity joint, comprising:
- providing (101) a blank, preferably a bar-shaped blank, and
- transforming (102) the blank into the articulated shaft component (1) using hot forming and/or semi-hot forming,
**characterized in that** cold calibration of the functional surface, in particular the entire functional surface, of the formed articulated shaft component (1) will be omitted, **characterized in that**
- to eliminate cold calibration during transforming (102), for example following hot forming and/or semi-hot forming, stamping or plasticizing actions of the articulated shaft component (1) at a temperature below 120°C, preferably below 80°C and particularly preferably below 50°C is omitted, and/or
- forming (102) will be completed within a time interval shorter than 25 seconds and preferably shorter than 20 seconds and especially preferably shorter than 10 seconds.

2. The method according to claim 1, wherein cold calibration, for example stretching and/or dimensional stamping, of the functional surfaces will be omitted during forming.

3. The method according to one of the preceding claims, wherein the articulated shaft component (1) is manufactured of the material Cf 53, C 45, C50 SAE J 403 1050 or S 45 CJ.

4. The method according to one of the preceding claims, wherein, following forming (102) without cold calibrating, a finishing procedure will be performed, for example in the form of hardening and/or machining.

5. The method according to one of the preceding claims, wherein the blank is transformed into the articulated shaft component (1) at a temperature between 50 °C and 1250 °C, preferably between 300 °C and 1250 °C and particularly preferably between 700 °C and 1250 °C.

6. The method according to one of the preceding claims, wherein cold calibration of the entire articulated shaft component (1) will be omitted.

7. The method according to one of the preceding claims, wherein, prior to transforming, the blank is coated, at least in sections, using an operating auxiliary agent for forming a release layer and/or sliding layer between the blank and a tool for transforming the blank.

8. The method according to one of the preceding claims, wherein the temperature change between the beginning of transforming and the end of transforming is located in a temperature interval smaller than 500 °C, preferably smaller than 250 °C and particularly preferably smaller than 50 °C, preferably depending on a geometric feature of the component or the blank, respectively.

9. The method according to one of the preceding claims, wherein forming (102) is followed by a cooling process (103).

10. The method according to one of the preceding claims, wherein the articulated shaft component (1) comprises a head portion (3) having a bottom portion (7) and a substantially axially extending shell portion (5) laterally surrounding a substantially cylindrical cavity, the cavity having an opening at an axial end for receiving the additional articulated shaft component in an axial displaceable manner.

11. The method according to claim 10, wherein the shell portion comprises at least one rolling element track on its side facing the cavity.

12. The method of assembling a shaft joint, comprising:
- providing the articulated shaft component (1) according to a method according to one of the preceding claims and the additional articulated shaft component; and
- connecting (104) the additional articulated shaft component (1) to the articulated shaft component to form the shaft joint...

13. An articulated shaft component manufactured using a method according to one of claims 1 to 11.

## Revendications

1. Procédé de fabrication d'un composant d'arbre de transmission (1) qui peut être relié directement ou indirectement par une surface fonctionnelle à un composant d'arbre de transmission supplémentaire, pour former un joint d'arbre, en particulier un joint homocinétique, consistant à :
- fournir (101) une ébauche, de préférence une ébauche en forme de barre, et
- transformer (102) l'ébauche en le composant d'arbre de transmission (1) par formage à chaud et/ou formage à mi-chaud,
**caractérisé en ce que** l'on renonce à un calibrage à froid sur la surface fonctionnelle, en particulier sur toute la surface fonctionnelle, du composant d'arbre de transmission (1) transformé,
**caractérisé en ce que**
- pour renoncer à un calibrage à froid lors de la transformation (102), par exemple après le formage à chaud et/ou le formage à mi-chaud, on renonce à une action d'estampage ou de plastification sur le composant d'arbre de transmission (1) à une température inférieure à 120 °C, de préférence inférieure à 80 °C et de manière particulièrement préférée inférieure à 50 °C, et/ou
- la transformation (102) est achevée dans un intervalle de temps inférieur à 25 secondes, de préférence inférieur à 20 secondes, et de manière particulièrement préférée inférieur à 10 secondes.

2. Procédé selon la revendication 1,
dans lequel, lors de la transformation, on renonce au calibrage à froid, par exemple à un étirage et/ou à un estampage à dimension, des surfaces fonctionnelles.

3. Procédé selon l'une des revendications précédentes,
dans lequel le composant d'arbre de transmission (1) est fabriqué à partir du matériau Cf 53, C 45, C50 SAE J 403 1050 ou S 45 CJ.

4. Procédé selon l'une des revendications précédentes,
dans lequel, après la transformation (102) sans calibrage à froid, on effectue un usinage de finition, par exemple sous la forme d'une trempe et/ou d'un usinage par enlèvement de matière.

5. Procédé selon l'une des revendications précédentes,
dans lequel l'ébauche est transformée en le composant d'arbre de transmission (1) à une température comprise entre 50 °C et 1250 °C, de préférence entre 300 °C et 1250 °C, et de manière particulièrement préférée entre 700 °C et 1250 °C.

6. Procédé selon l'une des revendications précédentes,
dans lequel on renonce au calibrage à froid sur l'ensemble du composant d'arbre de transmission (1).

7. Procédé selon l'une des revendications précédentes,
dans lequel, avant la transformation, l'ébauche est revêtue au moins localement d'un auxiliaire de traitement pour réaliser une couche de séparation et/ou de glissement entre l'ébauche et un outil de transformation de l'ébauche.

8. Procédé selon l'une des revendications précédentes,
dans lequel la variation de température entre le début de la transformation (102) et la fin de la transformation (102) se situe dans un intervalle de température qui est inférieur à 500 °C, de préférence inférieur à 250 °C et de manière particulièrement préférée inférieur à 50 °C, de préférence en fonction d'une caractéristique géométrique du composant ou de l'ébauche.

9. Procédé selon l'une des revendications précédentes,
dans lequel la transformation (102) est suivie d'un processus de refroidissement (103).

10. Procédé selon l'une des revendications précédentes,
dans lequel le composant d'arbre de transmission (1) comprend une portion de tête (3) présentant une zone de fond (7) et une zone d'enveloppe (5) s'étendant sensiblement axialement et entourant latéralement une cavité sensiblement cylindrique, ladite cavité présentant une ouverture à une extrémité axiale pour recevoir en coulissement axial ledit composant d'arbre de transmission supplémentaire.

11. Procédé selon la revendication 10,
dans lequel la zone d'enveloppe présente, sur son côté orienté vers la cavité, au moins une piste de roulement pour corps roulants.

12. Procédé d'assemblage d'un joint d'arbre, consistant à :
- réaliser le composant d'arbre de transmission (1) par un procédé selon l'une des revendications précédentes et réaliser le composant d'arbre de transmission supplémentaire; et
- relier (104) le composant d'arbre de transmission supplémentaire (1) au composant d'arbre de transmission, pour former le joint d'arbre.

13. Composant d'arbre de transmission fabriqué par un procédé selon l'une des revendications 1 à 11.
